# EUROPÄISCHE PATENTSCHRIFT

(11) **EP 2 678 187 B1**
(45) Veröffentlichungstag und Bekanntmachung des Hinweises auf die Patenterteilung: **03.05.2017**
(21) Anmeldenummer: 12705066.4
(22) Anmeldetag: 17.02.2012
(51) Int. Cl.: B60P 3/04

(54) **GROSSTIERTRANSPORTANHÄNGER, INSBESONDERE PFERDEANHÄNGER**
LARGE ANIMAL TRANSPORT TRAILER, IN PARTICULAR HORSE TRAILER
REMORQUE POUR ANIMAUX DE GRANDE TAILLE, EN PARTICULIER REMORQUE À CHEVAUX

(30) Priorität: 21.02.2011 DE 102011011877
(43) Veröffentlichungstag der Anmeldung: 01.01.2014
(73) Patentinhaber: Primero Holland B.V., 7602 JD Almelo (NL)
(72) Erfinder: DEGELSTEIN, Friedrich, 40629 Düsseldorf (DE)
(74) Vertreter: Beckord & Niedlich
(86) Internationale Anmeldenummer: PCT/EP2012/000695
(87) Internationale Veröffentlichungsnummer: WO 2012/113527

(56) Entgegenhaltungen:
- FR-A1- 2 894 196
- FR-A1- 2 932 433
- GB-A- 1 228 018
- US-A- 3 063 200
- US-A- 4 054 218

## Beschreibung

Die Erfindung betrifft einen Großtiertransportanhänger, insbesondere einen Pferdeanhänger.

Ein Großtiertransportanhänger, wie z. B. ein Pferdeanhänger, ist ein unmotorisierter Fahrzeugtyp, der als Anhänger an ein motorisiertes Kraftfahrzeug, wie z. B. einen PKW oder LKW, angehängt werden kann. Hierzu weist ein solcher Anhänger ein Fahrgestell auf, das in der Regel aus verschweißten Stahlträgern aufgebaut ist. Auf das Fahrgestell ist meist eine Karosserie in Form eines geschlossenen Aufbaus aufgebaut, der aus zwei parallelen Außenseitenwänden und einem zur Verbesserung der Aerodynamik zumindest abschnittsweise konkav oder abgerundet nach vorne zulaufenden Frontabschnitt besteht. Der Aufbau kann z. B. aus einfachen Holzbrettern oder Sandwichplatten bestehen, die in einen Aluminiumrahmen eingefässt sind und so den Frontabschnitt sowie die Außenseitenwände bilden. Modernere Anhänger besitzen zudem oft eine Dachhaube aus glasfaserverstärktem Kunststoff (GFK).

Weiterhin gibt es verschiedene Konstruktionen, bei denen auf dem Fahrgestell ein Rahmengestell aufgebaut ist, welches außen jeweils mit einzelnen Karosserieelementen verkleidet ist. Beispiele hierfür werden in der FR 2 932 433 A1 und der FR 2 894 196 A1 gezeigt, wobei dort auch das Rahmengestell aus einzelnen Teilen schnell und einfach montiert werden kann, so dass die Anhänger jeweils in Einzelteilen zum Händler transportiert und dort erst vor Ort aufgebaut werden können. In der GB 1 228 018 A wird ein Aufbau beschrieben, bei dem ein sonst was ich Rahmengestell außen mit Aluminium und innen mit Holz verkleidet wird. Die US 3,063,200 zeigt zudem einen Aufbau mit konventionellen Seitenwänden, auf die oben ein Rahmengestell aufgesetzt ist, welches wiederum außen mit einzelnen Karosserieelementen verkleidet ist.

Zum Be- und Entladen befindet sich an der Rückseite des Pferdeanhängers eine Tür, die sich meist über die ganze Breite des Anhängers erstreckt und nach unten schwenkbar am Fahrgestell befestigt ist, um so eine Ent- und Beladerampe zu bilden. In ihrem Inneren weisen die meisten Anhänger eine oder zwei Stellplätze für die zu transportierenden Tiere auf. Wenn der Innenraum in zwei Stellplätze unterteilt werden soll, wird im Inneren des Anhängers üblicherweise eine Trennwand aus Holz befestigt, die in Fahrtrichtung vorne an einer Querstange befestigt ist und in Fahrtrichtung hinten meist mit zwei jeweils zwischen der Trennwand und einer der Außenwände verlaufenden Stangen verbunden werden kann, um die Trennwand zu stabilisieren. Hierzu können die beiden hinteren Stangen nach dem Beladen des Pferdeanhängers in Halterungen eingehakt werden.

Derartige Anhänger bieten bei Verkehrsunfällen jedoch nur einen ungenügenden Schutz für die oft wertvollen Tiere.

Es ist daher Aufgabe der Erfindung, einen Großtiertransportanhänger, insbesondere einen Pferdeanhänger, mit einem verbesserten Schutz für die Tiere bereitzustellen.

Diese Aufgabe wird durch einen Großtiertransportanhänger gemäß Anspruch 1 gelöst.

Erfindungsgemäß weist der Anhänger eine einen Stellplatz für das zu transportierende Großtier umschließende, selbsttragende Innenstruktur und eine die Innenstruktur umgebende selbsttragende Außenkarosserie auf. Diese selbsttragende Außenkarosserie ist z.B. als ein Bauteil über die selbsttragende Innenstruktur gestülpt und beispielsweise nur im unteren Bereich, d. h. mit einem Fahrgestell bzw. einer Bodenplatte des Anhängers, mit dem Anhänger verbunden. Die selbsttragende Innenstruktur ist dabei im Wesentlichen mit einem Mindestabstand von der Außenkarosserie beabstandet angeordnet. Unter "Großtieren" im Sinne der vorliegenden Erfindung sind Huftiere, wie insbesondere Pferde, Rinder, Kamele oder dergleichen zu verstehen, wobei der Anhänger so konzipiert ist, dass sowohl große als auch kleine Tiere dieser Gattung darin transportierbar sind, d. h. dass beispielsweise Pferde von Ponygröße bis zur Größe eines Kaltblut-Kutschpferdes transportierbar sind.

Da die Innenstruktur selbsttragend ausgebildet ist, benötigt sie keine weitere Unterstützung, ist formstabil und verformt sich z. B. nicht unter ihrem Eigengewicht. Die selbsttragende Innenstruktur bildet somit als Sicherheitszelle im Falle eines Verkehrsunfalls einen zusätzlichen Schutz für die Tiere. Außerdem können die selbsttragende Außenkarosserie mit ihren Außenseitenwänden, dem Frontabschnitt und der Dachhaube und die selbsttragende Innenstruktur unabhängig voneinander aufgebaut werden, was z. B. die Gestaltungsräume bei der Formgebung der Außenkarosserie erweitert. So ist z. B. eine Optimierung des Luftwiderstandswerts des Pferdeanhängers durch entsprechende Gestaltung der Außenkarosserie möglich. Ferner können im Bedarfsfall die Innenstruktur oder die Außenkarosserie unabhängig voneinander repariert werden, z. B. durch vollständigen oder teilweisen Austausch.

Die abhängigen Ansprüche und die weitere Beschreibung enthalten besonders vorteilhafte Ausgestaltungen und Weiterbildungen der Erfindung.

Vorzugsweise sind die selbsttragende Innenstruktur und die Außenkarosserie in einem oberen Bereich zumindest stellenweise miteinander verbunden. Durch die Verbindung der selbsttragenden Innenstruktur mit der Außenkarosserie wird eine zusätzliche Versteifung der Außenkarosserie erreicht. Die Verbindung der selbsttragenden Innenstruktur mit der Außenkarosserie kann mittels Kraft-, Form- oder Stoffschluss erfolgen.

Bevorzugt werden dabei die selbsttragende Innenstruktur und die Außenkarosserie durch elastische Verbindungen untereinander verbunden. Es werden dann innerhalb der Elastizitätsgrenze der elastischen Verbindung keine Zug- oder Druckkräfte von der Außenkarosserie zur selbstragenden Innenstruktur oder umgekehrt übertragen. So kann das Risiko reduziert werden, dass z. B. eine Beschädigung der Außenkarosserie zugleich eine Verformung oder Beschädigung der selbsttragenden Innenstruktur nach sich zieht. Umgekehrt zieht dann eine Verformung oder Beschädigung der selbsttragenden Innenstruktur nicht zwangsläufig eine Beschädigung der Außenkarosserie nach sich. Zur Herstellung der elastischen Verbindung kann besonders bevorzugt ein dauerelastischer Klebstoff verwendet werden. Die elastische Verbindung kann gemäß einer Alternative durch federnde Dämpfungselemente hergestellt werden. Die federnden Dämpfungselemente können Federn und Dämpfer als separate Bauteile aufweisen oder diese Bauteile sind in einem Bauteil einstückig und/oder materialeinheitlich zusammengefasst. Es kann sich z. B. um ein Material wandeln, das elastisch verformbar ist und mechanische Schwingungen dämpft, wie z. B. PU-Schaum oder-Klebstoff, Silikonklebstoff etc

Die Verbindungsstellen bzw. Verbindungsflächen, an denen die selbsttragende Innenstruktur und die Außenkarosserie miteinander verbunden sind, können dabei verschiedenste Formen aufweisen. Sie können z. B. eine Nichtverbindungsfläche ring- oder rahmenförmig einschließen. Vorzugsweise weisen die selbsttragende Innenstruktur und die Außenkarosserie punktuelle und/oder linienförmige Verbindungsflächen auf, wie sie z. B. durch den Auftrag von Klebstoff zur Herstellung einer stoffschlüssigen Verbindung entstehen. Dabei erstrecken sich die Verbindungsflächen bevorzugt abschnittsweise flächig entlang von Streben bzw. Holmen der selbsttragenden Innenstruktur bzw. sind punktuell entlang der Streben bzw. Holme angeordnet.

Die selbsttragende Innenstruktur kann auf verschiedene Weise aufgebaut sein. So kann sie z. B. durch flächige Bauteile, wie z. B. Kunststoffplatten, gebildet sein. Ferner kann die Innenstruktur auch als einstückiges Kunststoffspritzguss oder -blasteil ausgebildet sein. Vorzugsweise umfasst die Innenstruktur aber eine Gitterrahmenstruktur. Eine derartige Gitterrahmenstruktur ist besonders robust bei einfachem Aufbau und geringem Gewicht.

Die Gitterrahmenstruktur kann eine beliebige Gestalt aufweisen und z. B. dem Innenraum der Außenkarosserie angepasst, d. h. der Form der Außenkarosserie folgend, ausgebildet sein. Vorzugsweise ist die Gitterrahmenstruktur im Wesentlichen quaderförmig. Eine quaderförmige Ausbildung der Gitterrahmenstruktur bietet ein optimales Verhältnis von Stabilität der Gitterrahmenstruktur zu Raumausnutzung im Großtiertransportanhänger. Außerdem entspricht eine quaderförmige Gitterrahmenstruktur der Form der Stellplätze im Großtiertransportanhänger, die ebenfalls im Wesentlichen quaderförmig ausgebildet sind. Dabei kann die Gitterrahmenstruktur aus rechtwinkelig zueinander angeordneten Rohren, Holmen oder Stangen gebildet sein. Alternativ können die Rohre, Holme oder Stangen auch unter anderen Winkeln zueinander angeordnet sein, wie z. B, 30°, 45° oder 60°.

Die Rohre, Holme oder Stangen der Gitterrahmenstruktur können auf unterschiedliche Art und Weise miteinander verbunden sein. Es kann sich z. B. um stoffschlüssige Verbindungen, wie z. B. Schweiß- oder Klebeverbindungen, oder um form- oder kraftschlüssige Verbindungen handeln. Die Rohre, Holme oder Stangen können aus Metall oder aus Kunststoff, wie z. B. glas- oder kohlefaserverstärktem Kunststoff, bestehen. Vorzugsweise ist die Gitterrahmenstruktur aus unlösbar miteinander verbundenen, besonders bevorzugt, verschweißten Rohrabschnitten, vorzugsweise aus Metall, gebildet. Die einzelnen, hohlen Rohrabschnitte können dabei einen runden Querschnitt mit z. B. 60 mm Durchmesser bei einer Wandstärke von 3 mm aufweisen. Eine aus derartigen Rohrabschnitten, z.B. durch Verschweißen, hergestellte Gitterrahmenstruktur weist einen besonders einfachen und robusten Aufbau auf.

Die selbsttragende Innenstruktur kann vollständig geschlossen ausgebildet sein, d. h. im Fall einer im Wesentlichen quaderförmigen Ausbildung sind alle sechs Flächen des Quaders von der Gitterrahmenstruktur geschlossen, so dass alle sechs Flächen von je einem aus Streben bzw. Holmen gebildeten Rechteck oder Quadrat begrenzt werden. Vorzugsweise weist die selbsttragende Innenstruktur eine Seitenwand und/oder eine Trennwand auf. Besonders einfach können an einer Gitterrahmenstruktur die Seitenwände an ihren Außenseiten zur seitlichen Begrenzung der Stellplätze und die Trennwand in der Mitte zum Bilden zweier Stellplätze für z. B. zwei Pferde angebracht werden. Die Befestigung kann durch Einhängen in entsprechende Halterungen der Gitterrahmenstruktur erfolgen. Zugleich wird durch die Seitenwand und/oder die Trennwand eine weitere Versteifung der Gitterrahmenstruktur erreicht, so dass der Schutz noch gesteigert wird.

Vorzugsweise ist die selbsttragende Innenstruktur mit einem Fahrgestell des Großtiertransportanhängers verbunden. Somit wird der Rahmen des Fahrgestells des Großtiertransportanhängers verwendet, um die nach unten offene selbsttragende, U-förmige Innenstruktur zu schließen. Die selbsttragende Innenstruktur bildet somit zusammen mit dem Fahrgestell eine geschlossene Käfigstruktur. So wird auf einfache Art und Weise der Fahrgestellrahmen oder eine steife Bodenplatte des Großtiertransportanhängers zum Aufbau der selbsttragenden Innenstruktur verwendet, wobei die Bodenplatte des Anhängers direkt auch den Boden der Innenstruktur bildet, auf dem die Tiere stehen können.

Um die selbsttragende Innenstruktur insbesondere beim Auftreten von in Fahrtrichtung seitlich gerichteten Kräften zu versteifen, weist die Innenstruktur vorzugsweise Stützstreben auf, die mit einem Fahrgestell des Großtiertransportanhängers verbunden sind. Zur Befestigung der Stützstreben kann das Fahrgestell Kragbalken aufweisen, die sich quer zur Fahrtrichtung des Großtiertransportanhänger erstrecken und einen über den seitlichen Rand einer Bodenplatte hervorstehenden Abschnitt aufweisen, an dem die Stützstreben mit ihren ersten Enden befestigt sind. Die zweiten Enden der Stützstreben sind mit der selbsttragenden Innenstruktur verbunden. So kann auf einfache Art und Weise die Steifigkeit der selbsttragenden Innenstruktur erhöht werden, ohne dass das Gewicht der selbsttragenden Innenstruktur, z. B. durch Verwendung von Rohrabschnitten mit einem größeren Querschnitt und höheren Wandstärken, zunimmt. Dabei nehmen die Stützstreben sowohl Kräfte auf, die von außen nach innen auf die selbsttragende Innenstruktur wirken als auch Kräfte von innen nach außen. Die Stützstreben können zwischen der selbsttragenden Innenstruktur und der Außenkarosserie angeordnet sein, d. h. sie sind innerhalb der Außenkarosserie angeordnet, schränken aber den Freiraum innerhalb der Innenstruktur nicht ein.

Die Außenkarosserie ist einfach, z. B. als ein (vorzugsweise komplettes) Bauteil, über die selbsttragende Innenstruktur gestülpt werden und beispielsweise nur im unteren Bereich, d. h. mit einem Fahrgestell bzw. einer Bodenplatte des Anhängers, mit dem Anhänger verbunden sein. Vorzugsweise ist die selbsttragende Innenstruktur im Wesentlichen mit einem Mindestabstand von der Außenkarosserie beabstandet angeordnet. "Im Wesentlichen" heißt dabei, dass lediglich an eventuellen Verbindungsstellen der Mindestabstand z. B. von einer elastischen Klebstoffschicht oder einer Abstandshalterung, die auch zur Verbindung der Teile dient, überbrückt, oder in diesen Bereichen eventuell der Mindestabstand unterschritten wird. Dies erlaubt es, dass die Innenstruktur von innen und die Außenkarosserie von außen verformt werden können, ohne jeweils die andere Struktur zu beschädigen. Somit wird zwischen der Innenstruktur und der Außenkarosserie eine Knautschzone gebildet, die sich im Falle eines Verkehrsunfalls verformen kann und Aufprallenergie absorbiert. Umgekehrt führt eine Beschädigung der Innenstruktur, z. B. ein Tritt eines scheuenden Pferdes gegen eine Seitenwand der Innenstruktur, nicht zu einer Beschädigung der Außenkarosserie. In dem durch den Mindestabstand gebildeten Hohlraum zwischen der Innenstruktur und der Außenkarosserie kann ein elastisches Material eingebracht sein, das eine zusätzliche Versteifung des Großtiertransportanhängers bewirkt. Es kann sich dabei z. B. um ein elastisch verformbares Kunststoffmaterial, beispielsweise ein elastisches Isoliermaterial wie z. B. PU-Schaum, handeln.

Durch einen geeigneten Abstand zwischen Innenstruktur und Außenkarosserie kann außerdem eine Verbesserung der Fahrdynamik des Großtiertransportanhängers, vor allem bei Kurvenfahrten, bewirkt werden. So kann bei geeigneter Ausgestaltung bzw. Anordnung der Seitenwände der Innenstruktur das Risiko reduziert werden, dass es z. B. aufgrund von Fliehkräften bei Kurvenfahrten oder Schlingerbewegungen zu Schwerpunktverlagerungen eines transportierten Tieres zu weit seitlich nach außen kommt, was ein Umkippen des Anhängers begünstigen könnte. Derartige seitliche Schwerpunktverlagerungen können durch die in der Außenkaroserie angeordnete selbsttragende Innenstruktur besser begrenzt werden als durch die Innenseiten der Außenkarosserie, d. h. der Spielraum für Schwerpunktverlagerungen ist durch die selbstragende Innenstruktur reduziert.

Die selbsttragende Innenstruktur kann mit weiteren, zusätzlichen Versteifungselementen wie Zusatzstreben versehen werden, die beispielsweise Seitenwände verstärken, um den Schutz im Falle eines seitlichen Aufpralls eines PKW oder LKW zu verbessern. Vorzugsweise weist der Großtiertransportanhänger einen Überrollbügel auf, um den Schutz im Falle eines Überschlags des Großtiertransportanhängers oder Umfallens auf die Seite zu verbessern. So wird insbesondere ein Eindrücken der Dachhaube des Großtiertransportanhängers im Falle eines Überschlags verhindert. Ein solcher Überrollbügel kann als separates Bauteil oder auch als Teil der Außenkarosserie ausgebildet sein und bietet einen verbesserten Schutz auch ohne eine selbsttragende Innenstruktur, d. h. bei herkömmlichen Pferdeanhängern. Die Verwendung eines Überrollbügels in einem solchen Großtiertransportanhänger, insbesondere Pferdeanhänger, kann somit auch als eigenständige Lösung der gestellten Aufgabe zu sehen sein.

Vorzugsweise ist aber der Überrollbügel der Innenstruktur zugeordnet. Der Überrollbügel kann also Teil der selbsttragenden Innenstruktur sein und ist z. B. an der Gitterrahmenstruktur befestigt.

Der Überrollbügel kann geradlinig, d. h. ohne Knickpunkt im von unten nach oben verlaufenden Abschnitt des Überrollbügels ausgebildet sein. Vorzugsweise ist der Überrollbügel gekröpft ausgebildet. Durch die gekröpfte Ausbildung des Überrollbügels wird erreicht, dass das obere Ende des Überrollbügels in einem besonders kritischen Bereich der Dachhaube des Pferdeanhängers angeordnet werden kann, um hier eine Verstärkung zu bewirken. Ferner kann durch die gekröpfte Ausbildung eine Anpassung des Überrollbügels an Fensteröffnungen der Außenkarosserie erreicht werden.

Um den Schutz im Fall eines Überschlags des Großtiertransportanhängers zu verbessern, kann mehr als ein Überrollbügel im Anhänger angeordnet sein. Vorzugsweise weist der Anhänger zwei Überrollbügel auf, die zueinander gekröpft ausgebildet sind. Der erste der beiden Überrollbügel kann in Fahrtrichtung, der zweite entgegen der Fahrtrichtung gekröpft ausgebildet sein. Diese Anordnung der beiden Überrollbügel bietet einen optimalen Schutz bei einem seitlichen Überschlag um eine in Fahrtrichtung des Großtiertransportanhängers verlaufende Drehachse. Durch die zueinander ausgerichtete Kröpfung der Überrollbügel weisen die beiden Überrollbügel an ihren oberen Enden einen geringeren Abstand als an ihren unteren Enden auf. Durch die gekröpfte Ausbildung der Überrollbügel können die oberen Enden der jeweiligen Überrollbügel in besonders kritischen Bereichen der Dachhaube des Großtiertransportanhänger angeordnet werden, während die unteren Enden der jeweiligen Überrollbügel an den äußeren Ecken der Stellplätze befestigt werden können, um so die Größe der Stellplätze zu maximieren. Somit schützen die Überrollbügel durch ihren geringen Abstand voneinander die Dachhaube besonders gut. Zusätzlich oder alternativ zu einem oder mehreren quer zur Fahrtrichtung verlaufenden Überrollbügeln weist der Anhänger eine Überrollbügel auf, der längs in Fahrtrichtung verlaufend angeordnet ist. Wenn sowohl längslaufende als auch querlaufende Überrollbügel verwendet werden, weisen diese einen Kreuzungspunkt auf und bilden folglich auch im Überkopfbereich eine zumindest grobe Käfigstruktur zum besseren Schutz der Tiere.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Es zeigen:

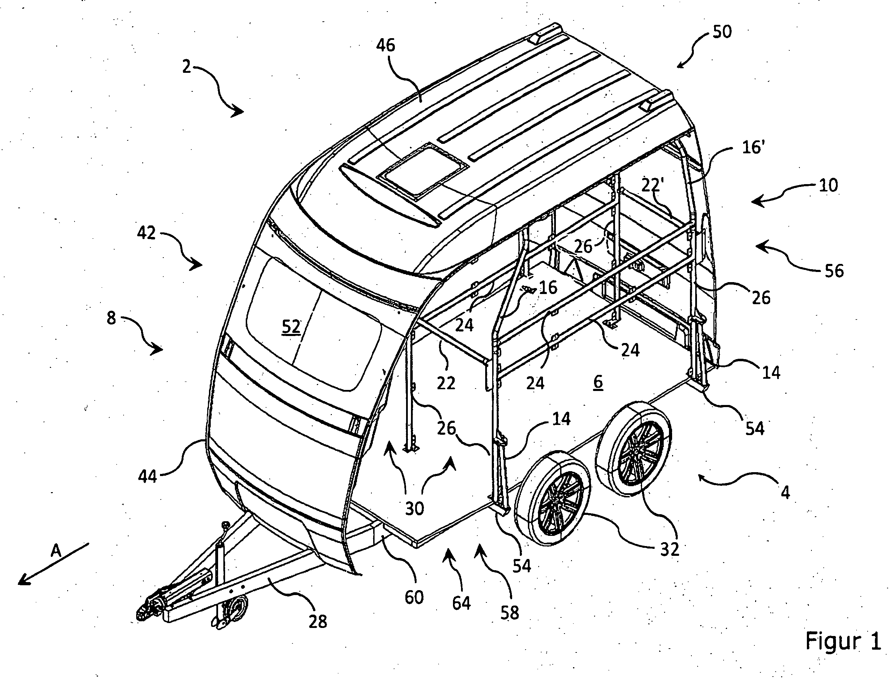

- Figur 1: eine perspektivische Ansicht eines Ausführungsbeispiels eines erfindungsgemäßen Pferdeanhängers ohne Außenseitenwand,
- Figur 2: einen Längsschnitt durch den Anhänger gemäß Figur 1,
- Figur 3: eine perspektivische Ansicht der Innenstruktur des Pferdeanhängers gemäß Figur 1 ohne Trenn- und Seitenwänden sowie ohne Außenkarosserie,
- Figur 4: einen Längsschnitt durch den Anhänger gemäß Figur 3,
- Figur 5: einen Querschnitt durch den Anhänger entlang der Schnittlinie A'-A' der Figur 4,
- Figur 6: die gleiche Ansicht auf die Innenstruktur des Pferdeanhängers wie in Figur 3, jedoch mit Trenn- und Seitenwänden der Innenstruktur, und
- Figur 7: die gleiche Ansicht auf die Innenstruktur des Pferdeanhängers wie in Figur 3. jedoch mit einer Außenseitenwand der Außenkarosserie.

Im Folgenden wird davon ausgegangen, das der Großtiertransportanhänger wie üblich zum Transport von Pferden dient, und wird daher als Pferdeanhänger bezeichnet. Dies schließt den Transport anderer Tiere jedoch nicht aus.

Der in den Figuren dargestellte Pferdeanhänger 2 weist ein Fahrgestell 4 auf, an dem auf zwei Achsen vier Räder 32 drehbar gelagert sind. Das Fahrgestell 4 weist einen Leiterrahmen 64 mit zwei Längsholmen 60 und einer Mehrzahl die beiden Längsholme 60 verbindende Sprossen (nicht dargestellt) auf. Vorne weist das Fahrgestell 4 eine Deichsel 28 auf, mit der der Pferdeanhänger 2 an ein Kraftfahrzeug (nicht dargestellt), wie z. B. einen PKW oder LKW, angehängt werden kann.

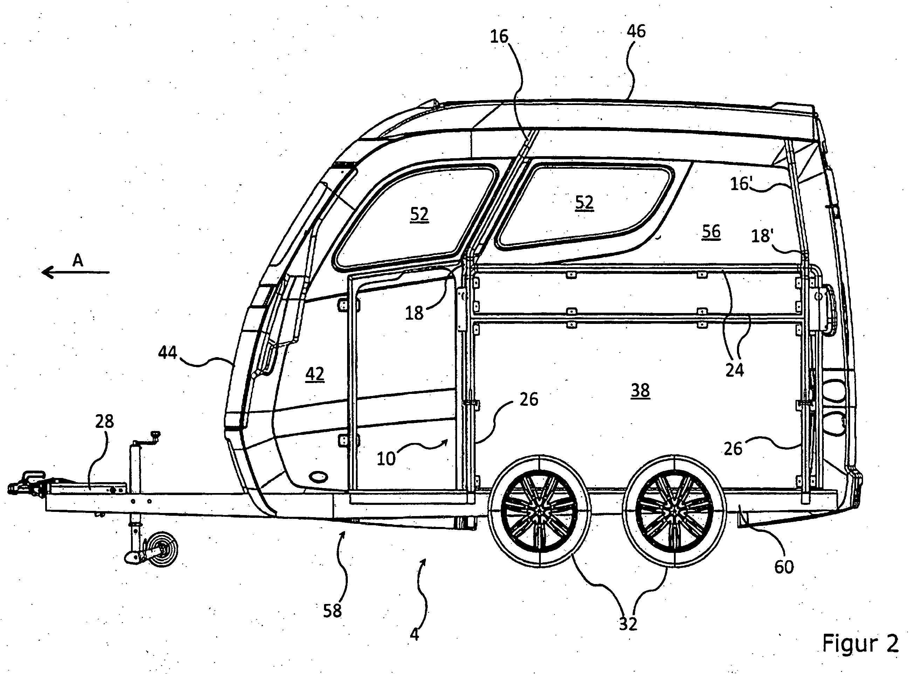

Auf das Fahrgestell 4 ist ein Aufbau 50 aufgesetzt, innerhalb dessen sich zwei Stellplätze 30 für je ein Pferd (nicht dargestellt) befinden. Der Anhänger weist nur eine Beladungsebene auf, ist also einstöckig ausgebildet. Der Boden der Stellplätze 30 wird von einer Bodenplatte 6 gebildet, die mit dem Fahrgestell 4 verbunden ist. Der Aufbau 50 umfasst zwei Außenseitenwände 42 (von denen eine zur Darstellung des Innenraumes 56 des Pferdeanhängers 2 entfernt ist), einen zur Verbesserung der Aerodynamik windschnittig zulaufenden Frontabschnitt 44 und eine Dachhaube 46 und bildet die Außenkarosserie 8 des Pferdeanhängers 2. Der Frontabschnitt 44 und die Außenseitenwände 42 (siehe Figur 2) weisen Fensteröffnungen 52 auf. Der Aufbau 50 ist aus glasfaserverstärktem Kunststoff gefertigt.

Im Innenraum der Außenkarosserie 8 ist eine selbsttragende Innenstruktur 10 angeordnet, die den Transportraum (im Folgenden "Transportbox" 56 genannt) für die Pferde bildet. Die Außenkarosserie 8 wurde hier einfach über die selbsttragende Innenstruktur 10 aufgesetzt bzw. übergestülpt. Die Innenstruktur 10 dient dabei als eine Art Sicherheitszelle für die Pferde. Die Transportbox 56 ist von ihren Abmessungen her kleiner als der Innenraum der Außenkarosserie 8. Somit bildet die größere Außenkarosserie 8 eine Knautschzone 58.

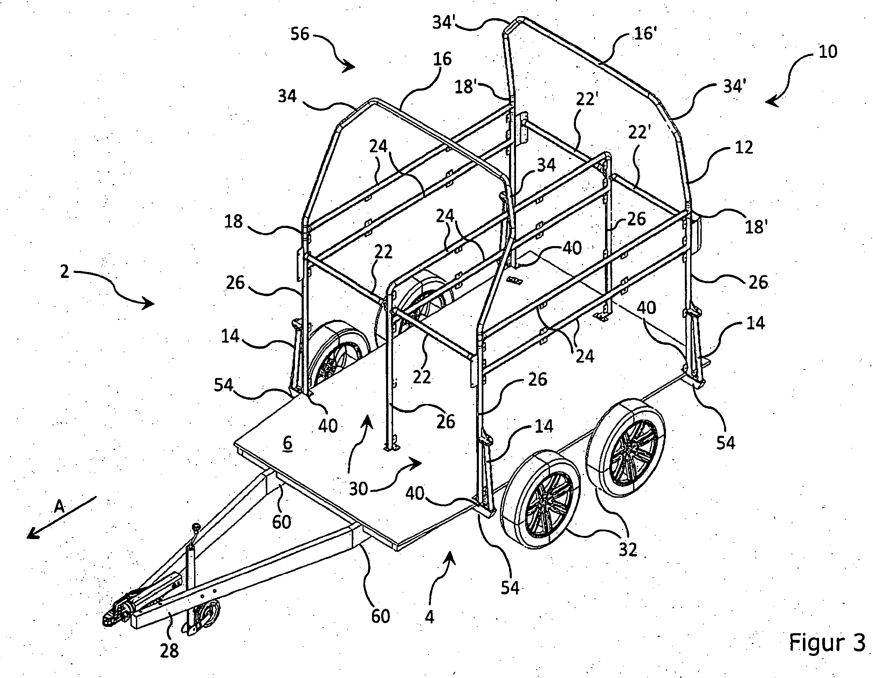

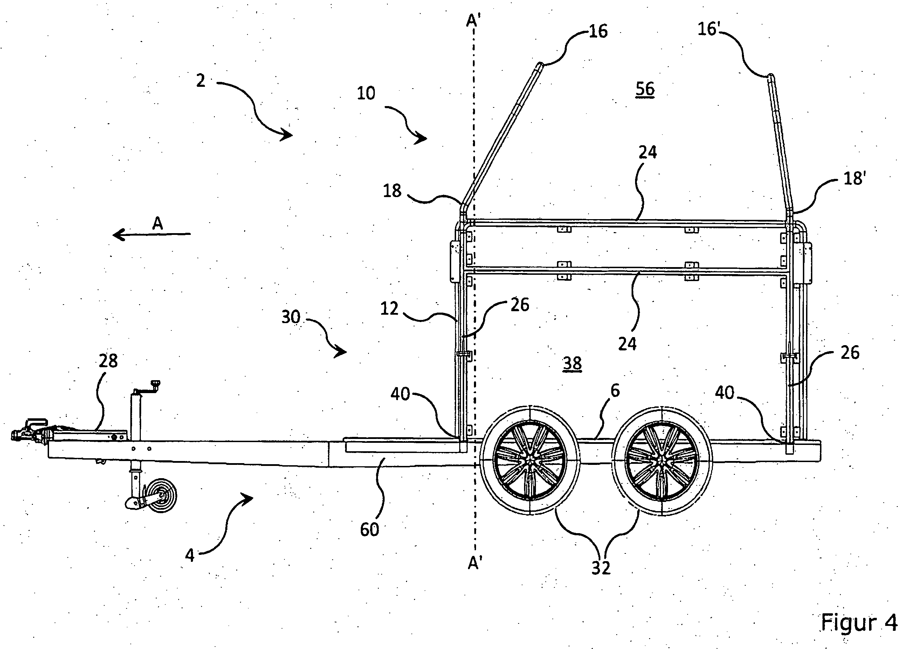

Die selbsttragende Innenstruktur 10 weist, wie in den Figuren 3 bis 5 besonders deutlich erkennbar ist, eine Gitterrahmenstruktur 12 mit bezüglich ihrer Außenabmessungen im Wesentlichen quaderförmiger Gestalt auf. Sie ist aus miteinander verschweißten, hohlen Rohrabschnitten aus Metall gebildet, die im vorliegenden Ausführungsbeispiel einen Durchmesser von 60 mm und eine Wandstärke von 3 mm aufweisen.

Die Gitterrahmenstruktur 12 weist dabei sechs Stützpfeiler 26, vier Querstreben 22, 22', sechs Längsstreben 24, vier Stützstreben 14 und zwei Überrollbügel 16, 16' auf.

Die Stützpfeiler 26 erstrecken sich von dem Fahrgestell 4 senkrecht durch die Bodenplatte 6 und sind an Eckpunkten 40 der rechteckförmigen Grundflächen der beiden Stellplätze 30 angeordnet. Sie begrenzen somit die äußeren Abmessungen der Stellplätze 30. Die Stützpfeiler 26 sind mit ihren unteren Enden an dem Fahrgestell 4 des Pferdeanhängers 2 befestigt. Die Bodenplatte 6 weist Öffnungen auf, durch die die Stützpfeiler 26 ragen. Zur Befestigung der Stützpfeiler 26 am Leiterrahmen 64 und/oder an der Bodenplatte 6 können z. B. Schraub- oder Schweißverbindungen verwendet werden.

Mit den oberen Enden der Stützpfeiler 26 sind die Querstreben 22, 22' und die Längsstreben 24 verbunden. Hierfür können z. B. Schraub- oder Schweißverbindungen verwendet werden. Die Querstreben 22, 22' verlaufen quer zur Fahrtrichtung A des Pferdeanhängers 2, während die Längsstreben 24 in drei Zweiergruppen sich in Fahrtrichtung A des Pferdeanhängers 2 erstrecken. Die Stützpfeiler 26, Längsstreben 24 und Querstreben 22, 22' bilden einen quaderförmigen Grundkörper mit in Bezug zu ihrer Erstreckungsrichtung rechtwinklig zueinander angeordneten Streben bzw. Pfeiler 22, 22', 24, 26, die einen unteren Abschnitt der Sicherheitszelle bilden. Die Querstreben 22, 22' und die Längsstreben 24 sind mit einem Abstand von der Bodenplatte 6 angeordnet, der kleiner als die Schulterhöhe von Pferden ist. Der Abstand kann zwischen 100 cm und 200 cm liegen. Die Querstreben 22, 22' und die Längsstreben 24 verlaufen dabei unterhalb der Fensteröffnungen 52 in den Außenseitenwänden (siehe Figur 2).

Die in Fahrtrichtung A hinteren Querstreben 22' sind lösbar mit den hinteren Stützpfeilern 26 verbunden, so dass die Querstrebe 22' bei Bedarf, d. h. zum Be- oder Entladen der Stellplätze 30 des Pferdeanhängers 2, entfernt werden kann.

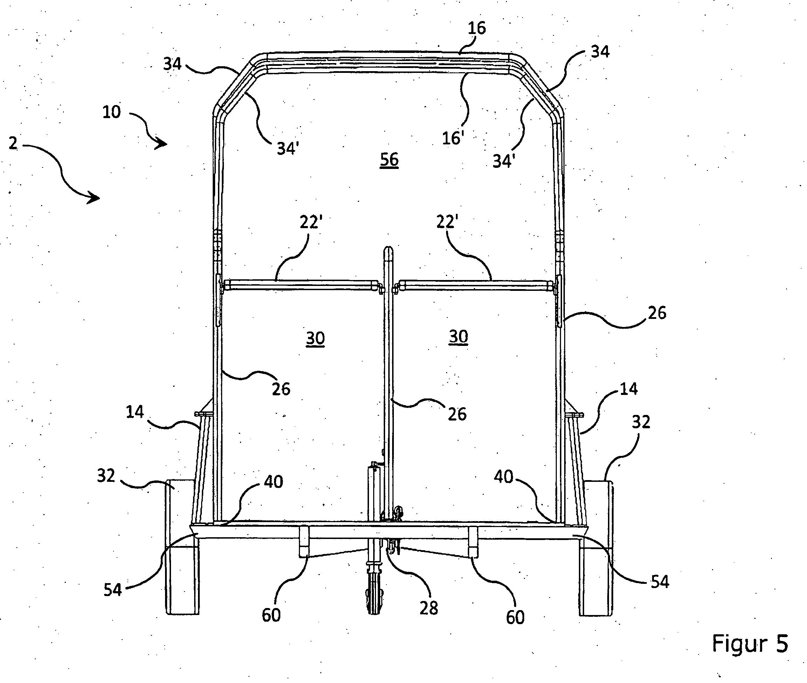

Die Stützstreben 14 sind mit ihren ersten Enden an dem Fahrgestell 4 des Pferdeanhängers 2 befestigt und mit ihren zweiten Enden mit den Stützpfeilern 26 verbunden. Hierzu weist das Fahrgestell 4 Kragbalken 54 auf, die sich, wie in Figur 5 dargestellt, quer zur Fahrtrichtung A über die Bodenplatte 6 hinaus erstrecken. Mit diesen hervorragenden Enden der Kragbalken 54 sind die ersten Enden der Stützstreben 14 verbunden. Die Stützstreben 14 können sowohl von außen auf die Gitterrahmenstruktur 12 als auch von innen auf die Gitterrahmenstruktur 12 wirkende Kräfte aufnehmen. Sie erhöhen so die Steifigkeit der selbsttragenden Innenstruktur 10.

Ein oberer Abschnitt der Sicherheitszelle wird durch zwei Überrollbügel 16, 16' gebildet. Die Überrollbügel 16, 16' sind an die Stützpfeiler 26 angefügt bzw. einstückig und/oder materialeinheitlich mit den Stützpfeilern 26 ausgebildet. Der in Fahrtrichtung A vordere Überrollbügel 16 weist an der Verbindungs- bzw. Übergangsstelle zum Stützpfeiler 26 eine Kröpfung 18 in Fahrtrichtung A (siehe Figur 2) auf. Der erste Überrollbügel 16 weist außerdem zwei Phasenabschnitte 34 mit 45°-Knicken zur Anpassung an die Form der Dachhaube 46 auf.

Der in Fahrtrichtung A erste Überrollbügel 16 ist wie der zweite Überrollbügel 16' an den Stützpfeilern 26 befestigt bzw. einstückig mit ihm ausgebildet und weist in dem Übergangsbereich von der Stützstrebe 26 in den zweiten Überrollbügel 16' eine Kröpfung 18' entgegen der Fahrtrichtung A auf. Der zweite Überrollbügel 16' weist auch zwei Phasenabschnitte 34' mit 45°-Knicken zur Anpassung an die Form der Dachhaube 46 auf.

Durch die zueinander gerichtete Kröpfung der beiden Überrollbügel 16, 16' verlaufen die beiden Überrollbügel 16, 16' in einem besonders schwachen Bereich der Dachhaube 46 der Außenkarosserie 8. So wird dieser Bereich der Dachhaube 46 durch die beiden zueinander gekröpften Überrollbügel 16, 16' verstärkt und ein Eindrücken der Dachhaube 46 im Fall eines Überschlagens des Pferdeanhängers 2 um eine sich in Fahrtrichtung A erstreckende Drehachse verhindert. Zugleich wird der Schutz bei einem Umkippen des Pferdeanhängers 2 auf die Seite verbessert.

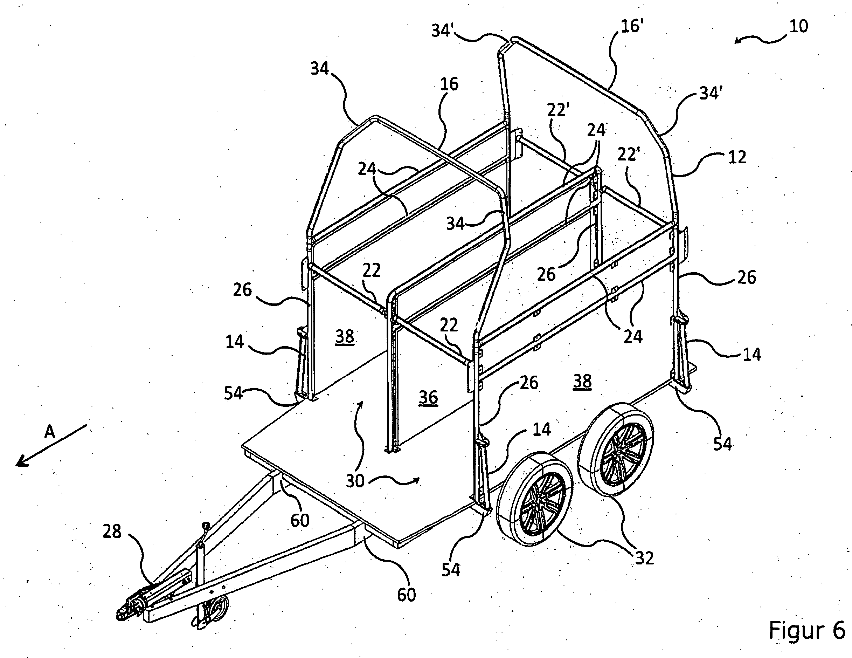

Das Innere der Transportbox 56 wird durch eine Trennwand 36 zweigeteilt, so dass die Transportbox 56 zwei Stellplätze 30 für je ein Pferd aufweist (siehe Figur 6). Die Trennwand 36 ist an dem aus den Stützpfeilern 26 und den Längsstreben 24 gebildeten mittleren Rechteck der Gitterrahmenstruktur 12 befestigt. Zwei Seitenwände 38 begrenzen die Stellplätze 30 seitlich. Sowohl die Trennwand 36 als auch die Seitenwände 38 weisen Zapfen auf, die in Halterungen der selbsttragenden Innenstruktur 10 eingehakt sind.

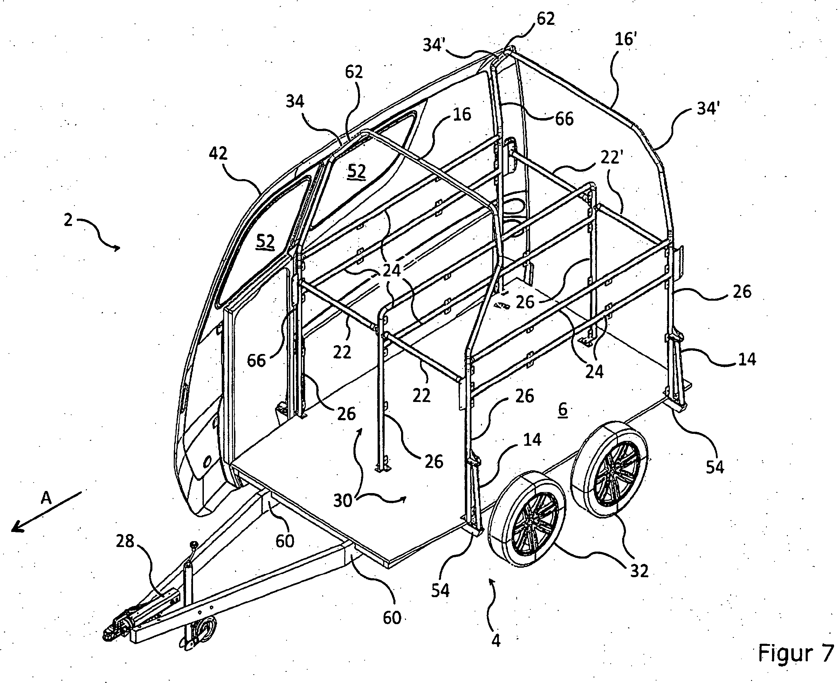

Die selbsttragende Innenstruktur 10 ist im Bereich punktueller oder linienförmiger Verbindungsflächen 62 mit dem Aufbau 50 bzw. Teilen der Außenkarosserie 8, also mit der in Figur 7 dargestellten Außenseitenwand 42 des Pferdeanhängers 2, mittels eines dauerelastischen Klebstoffs verbunden. Die Verbindungsflächen 62 erstrecken sich z. B. abschnittsweise entlang der Phasenanschnitte 34, 34'.

Die selbsttragende Innenstruktur 10 weist mit Ausnahme der Verbindungsflächen 62 einen Mindestabstand 66 von der Außenkarosserie 8 auf. So ist sichergestellt, dass eine Verformung oder Beschädigung der Außenkarosserie 8, z. B. der Außenseitenwände 42, nicht sofort eine Beschädigung der selbsttragenden Innenstruktur 10 nach sich zieht. Somit wird also ein Pferdeanhänger mit einer Sicherheitszelle bereitgestellt, der im Falle eines Verkehrsunfalls einen verbesserten Schutz für die Pferde bietet. Umgekehrt führt eine Beschädigung der Innenwände 38 der Innenstruktur 10 durch ein transportiertes Pferd nicht zu einer Beschädigung der Außenkarosserie 8.

Es wird abschließend noch einmal darauf hingewiesen, dass es sich bei dem zuvor im Detail beschriebenen Pferdeanhänger lediglich um ein bevorzugtes Ausführungsbeispiel der Erfindung handelt und dass die Erfindung vom Fachmann variiert werden kann, ohne den Bereich der Erfindung zu verlassen, soweit er durch die Ansprüche vorgegeben ist. So kann die Innenstruktur, auch lösbar und wieder verbindbar mit dem Fahrgestell des Anhängers verbunden sein, wobei dies ohne ein Entfernen der selbsttragenden Außenkarosserie erfolgen kann. In diesem Fall sind auch die Innenstruktur und die Außenkarosserie allenfalls lösbar miteinander verbunden, z. B. durch Schrauben und/oder geeignete Schnellverbinder. Der Anhänger könnte dann durch Ausbau der innenstruktur umgerüstet werden, um ihn für andere Zwecke bzw. zum Transport anderer Güter zu verwenden, wie z. B. von Motorrädern, Fahrrädern, Quads, Gokarts, Messe- oder Marktfahrzeugen, Schlafboxen oder Werkstattwagen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Großtiertransportanhänger, insbesondere Pferdeanhänger (2), mit einer selbsttragenden, einen Stellplatz für ein Großtier umschließenden Innenstruktur (10) und einer die Innenstruktur umgebenden Außenkarosserie (8), **dadurch gekennzeichnet, dass** eine selbsttragende Außenkarosserie (8) als ein Bauteil über die selbsttragende Innenstruktur gestülpt und die Innenstruktur im Wesentlichen mit einem Mindestabstand von der Außenkarosserie beabstandet angeordnet ist, wobei die Innenstruktur (10) und die Außenkarosserie (8) über punktuelle und/oder linienförmige Verbindungsflächen miteinander verbunden sind.

2. Großtiertransportanhänger nach Anspruch 1, **dadurch gekennzeichnet, dass** die Innenstruktur (10) und die Außenkarosserie (8) elastisch miteinander verbunden sind.

3. Großtiertransportanhänger nach einem der Ansprüche 1 oder 2, **dadurch gekennzeichnet, dass** die Innenstruktur (10) eine Gitterrahmenstruktur (12) umfasst.

4. Großtiertransportanhänger nach einem der Ansprüche 1 bis 3, **dadurch gekennzeichnet, dass** die Innenstruktur (10) eine Seitenwand (20) und/oder eine Trennwand (36) aufweist.

5. Großtiertransportanhänger nach Anspruch 3 oder 4, **dadurch gekennzeichnet, dass** die Gitterrahmenstruktur (12) im Wesentlichen quaderförmig ist.

6. Großtiertransportanhänger nach einem der Ansprüche 1 bis 5, **dadurch gekennzeichnet, dass** die Innenstruktur (10) mit einem Fahrgestell (4) des Großtiertransportanhängers verbunden ist.

7. Großtiertransportanhänger nach einem der Ansprüche 1 bis 6, **dadurch gekennzeichnet, dass** die Innenstruktur (10) Stützstreben (14) aufweist, die mit einem Fahrgestell (4) des Großtiertransportanhängers verbunden sind.

8. Großtiertransportanhänger, insbesondere nach einem der Ansprüche 1 bis 7, **gekennzeichnet durch** einen Überrollbügel (16, 16').

9. Großtiertransportanhänger nach Anspruch 8, **dadurch gekennzeichnet, dass** der Überrollbügel (16, 16') der Innenstruktur (10) zugeordnet ist.

10. Großtiertransportanhänger nach Anspruch 8 oder 9, **dadurch gekennzeichnet, dass** der Überrollbügel (16, 16') gekröpft ausgebildet ist.

11. Großtiertransportanhänger nach Anspruch 10, **dadurch gekennzeichnet, dass** zwei Überrollbügel (16, 16') zueinander gekröpft ausgebildet sind.

12. Großtiertransportanhänger nach einem der Ansprüche 10 bis 11, **dadurch gekennzeichnet, dass** zumindest ein Überrollbügel (16, 16') quer zur Fahrtrichtung (A) verläuft.

13. Großtiertransportanhänger nach einem der Ansprüche 9 bis 12, **dadurch gekennzeichnet, dass** zumindest ein Überrollbügel längs in Fahrtrichtung (A) verläuft.

## Claims

1. A large animal transport trailer, in particular a horse trailer (2), comprising a self-supporting inner structure (10), which encloses a space for a large animal, and an outer body (8), which surrounds the inner structure, **characterized in that** a self-supporting outer body (8), as a component, is put over the self-supporting inner structure and the inner structure is arranged so as to be spaced apart from the outer body substantially at a minimum distance, wherein the inner structure (10) and the outer body (8) are connected to one another via punctiform and/or linear joining surfaces.

2. The large animal transport trailer according to claim 1, **characterized in that** the inner structure (10) and the outer body (8) are connected to one another elastically.

3. The large animal transport trailer according to one of claims 1 or 2, **characterized in that** the inner structure (10) comprises a grid frame structure (12).

4. The large animal transport trailer according to one of claims 1 to 3, **characterized in that** the inner structure (10) has a side wall (20) and/or a separating wall (36).

5. The large animal transport trailer according to claim 3 or 4, **characterized in that** the grid frame structure (12) is substantially cuboid-shaped.

6. The large animal transport trailer according to one of claims 1 to 5, **characterized in that** the inner structure (10) is connected to a chassis (4) of the large animal transport trailer.

7. The large animal transport trailer according to one of claims 1 to 6, **characterized in that** the inner structure (10) has support struts (14), which are connected to a chassis (4) of the large animal transport trailer.

8. The large animal transport trailer according to one of claims 1 to 7, **characterized by** a rollover bar (16, 16').

9. The large animal transport trailer according to claim 8, **characterized in that** the rollover bar (16, 16') is assigned to the inner structure (10).

10. The large animal transport trailer according to claim 8 or 9, **characterized in that** the rollover bar (16, 16') is embodied so as to be cropped.

11. The large animal transport trailer according to claim 10, **characterized in that** two rollover bars (16, 16') are embodied so as to be cropped relative to one another.

12. The large animal transport trailer according to one of claims 10 to 11, **characterized in that** at least one rollover bar (16, 16') runs at right angles to the travel direction (A).

13. The large animal transport trailer according to one of claims 9 to 12, **characterized in that** at least one rollover bar runs lengthwise in travel direction (A).

## Revendications

1. Remorque destinée au transport d'animaux de grande taille, notamment van (2), avec une structure intérieure (10) autoporteuse, enfermant un emplacement pour un animal de grande taille et une carrosserie extérieure (8) entourant la structure intérieure, **caractérisée en ce qu'**une carrosserie extérieure (8) autoporteuse est retournée en tant qu'un élément constitutif par-dessus la structure intérieure autoportante et la structure intérieure est écartée sensiblement d'un écart minimal par rapport à la carrosserie extérieure, la structure intérieure (10) et la carrosserie extérieure (8) étant assemblées l'une à l'autre par l'intermédiaire de surfaces d'assemblage ponctuelles et/ou linéaires.

2. Remorque destinée au transport d'animaux de grande taille selon la revendication 1, **caractérisée en ce que** la structure intérieure (10) et la carrosserie extérieure (8) sont élastiquement assemblées l'une à l'autre.

3. Remorque destinée au transport d'animaux de grande taille selon l'une quelconque des revendications 1 ou 2, **caractérisée en ce que** la structure intérieure (10) comprend une structure en cadre grillagé (12).

4. Remorque destinée au transport d'animaux de grande taille selon l'une quelconque des revendications 1 à 3, **caractérisée en ce que** la structure intérieure (10) comporte une paroi latérale (20) et/ou une paroi de séparation (36).

5. Remorque destinée au transport d'animaux de grande taille selon la revendication 3 ou la revendication 4, **caractérisée en ce que** la structure en cadre grillagé (12) a sensiblement la forme d'un parallélépipède.

6. Remorque destinée au transport d'animaux de grande taille selon l'une quelconque des revendications 1 à 5, **caractérisée en ce que** la structure intérieure (10) est assemblée avec un châssis (4) de la remorque destinée au transport d'animaux de grande taille.

7. Remorque destinée au transport d'animaux de grande taille selon l'une quelconque des revendications 1 à 6, **caractérisée en ce que** la structure intérieure (10) comporte des montants d'appui (14) qui sont assemblés avec un châssis (4) de la remorque destinée au transport d'animaux de grande taille.

8. Remorque destinée au transport d'animaux de grande taille, notamment selon l'une quelconque des revendications 1 à 7, **caractérisée par** un arceau de sécurité (16, 16').

9. Remorque destinée au transport d'animaux de grande taille selon la revendication 8, **caractérisée en ce que** l'arceau de sécurité (16, 16') est associé à la structure intérieure (10).

10. Remorque destinée au transport d'animaux de grande taille selon la revendication 8 ou la revendication 9, **caractérisée en ce que** l'arceau de sécurité (16, 16') est conçu en étant coudé.

11. Remorque destinée au transport d'animaux de grande taille selon la revendication 10, **caractérisée en ce que** deux arceaux de sécurité (16, 16') sont conçus en étant coudés l'un par rapport à l'autre.

12. Remorque destinée au transport d'animaux de grande taille selon l'une quelconque des revendications 10 à 11, **caractérisée en ce qu'**au moins un arceau de sécurité (16, 16') s'écoule à la transversale de la direction de déplacement (A).

13. Remorque destinée au transport d'animaux de grande taille selon l'une quelconque des revendications 9 à 12, **caractérisée en ce qu'**au moins un arceau de sécurité s'écoule longitudinalement de la direction de déplacement (A).
